Europäisches Patentamt

European Patent Office

Office européen des brevets

(11) Veröffentlichungsnummer: **0 144 362**
**B1**

(12) **EUROPÄISCHE PATENTSCHRIFT**

(45) Veröffentlichungstag der Patentschrift:
31.05.89

(51) Int. Cl.⁴: **G 01 F 11/28**

(21) Anmeldenummer: **84901959.1**

(22) Anmeldetag: **04.06.84**

(86) Internationale Anmeldenummer:
**PCT/CH 84/00089**

(87) Internationale Veröffentlichungsnummer:
**WO 84/04964 (20.12.84 Gazette 84/30)**

(54) **VORRICHTUNG ZUM DOSIEREN VON FLÜSSIGKEITEN.**

(30) Priorität: **07.06.83 CH 3107/83**
**16.06.83 CH 3295/83**

(43) Veröffentlichungstag der Anmeldung:
**19.06.85 Patentblatt 85/25**

(45) Bekanntmachung des Hinweises auf die Patenterteilung:
**31.05.89 Patentblatt 89/22**

(84) Benannte Vertragsstaaten:
**BE DE FR NL SE**

(56) Entgegenhaltungen:
**DE-A-1 642 956**
**GB-A-967 436**
**US-A-3 718 438**

**Die Akte enthält technische Angaben, die nach dem Eingang der Anmeldung eingereicht wurden und die nicht in dieser Patentschrift enthalten sind.**

(73) Patentinhaber: **ANSCHERLIK, Arnost,**
**Schwarzenbergstrasse 1, CH- 8134 Adliswil (CH)**

(72) Erfinder: **ANSCHERLIK, Arnost,**
**Schwarzenbergstrasse 1, CH- 8134 Adliswil (CH)**

## Beschreibung

Die Erfindung betrifft eine Vorrichtung zum Dosieren von Flüssigkeiten, durch die eine Flüssigkeit durch eine pneumatische Einwirkung dosiert wird.

Die steigende technischen Anforderungen in der Prozessautomatisierung, in der Chemie und verwandten Industrie, sowie im Apparatebau etc. haben zur Konstruktion einer ganzen Reihe von Dosierungsvorrichtungen geführt, die mit Hilfe einer pneumatischen Einwirkung arbeiten. Diese Vorrichtungen zeichnen sich durch Einfachheit, Genauigkeit und kleine Störanfälligkeit aus.

Die deutsche Offenlegungsschrift 1 642 956 beschreibt eine Anordnung zum Dosieren von Flüssigkeiten, bestehend aus einem U-förmigen Messgefäss mit einem weiten und einem engen Schenkel, wobei der weite Schenkel direkt mittels eines Rohres an ein Vorratsgefäss angeschlossen ist und der enge Schenkel in die Atmosphäre mündet. Der obere Teil des Vorratsgefässes und der obere Teil des weiten Schenkels sind über zwei 3-Weg-Ventile mit zwei Gasleitungen und einer Entspannungsleitung verbunden. Die beiden 3-Weg-Ventile werden sequentiell durch eine Schalteinrichtung betätigt.

Die U.S.A. Patentschrift 3 718 438 beschreibt eine Vorrichtung zum Dosieren von Flüssigkeiten bestehend aus einem U-förmigen Dosierungsrohr, das auf der Seite, die in die Atmosphäre mündet, ein Absauggefäss hat und auf der anderen Seite ein Dosierungsgefäss besitzt, das an ein Füllungsgefäss angeschlossen ist, welches oberhalb des Dosierungsgefässes liegt, wobei in das Dosierungsrohr, zwischen dem Dosierungsgefäss und dem Füllungsgefäss, ein Zuflussrohr mündet, das direkt an ein Reservoir mit der zu dosierenden Flüssigkeit angeschlossen ist. Das Füllungsgefäss ist oben mit einer Überdruck, Unterdruck und Nulldruck liefernden Quelle verbunden, wobei zur Druckregelung ein Überdruckregler und ein Unterdruckregler dient.

Die bis heute bekannten Dosierungsvorrichtungen benötigen oft komplizierte Einrichtungen zur Stabilisierung der innerer Flüssigkeitsspiegel, müssen manchmal vor der ersten Inbetriebnahme bzw. beim Einschalten nach längerem Stillstand von der Hand mit der zu dosierenden Flüssigkeit gefüllt werden, es bilden sich auch beim Füllen dieser Vorrichtungen oft Luftblasen, die die Dosierungsgenauigkeit sowie die Funktion beeinträchtigen. Die Reservoire der zu dosierenden Flüssigkeiten sind öfters in ihrer Grösse begrenzt und können meistens nicht unterhalb dieser Vorrichtungen plaziert werden. Die Kontrolle des Füllstandes der Reservoire benötigt oft komplizierte Einrichtungen.

Die notwendigen Luftverteiler für Dosiervorrichtungen benötigen diverse Einrichtungen zur Verteilung der Hilfsdruckmedien. Zu diesem Zwecke werden hauptsächlich elektromagnetische, pneumatische und anders gesteuerte Systeme, wie Ventile, Nockenscheiben und ähnliche Einrichtungen eingesetzt. Diese Einrichtungen haben relativ viele mechanische Teile, Dichtungen usw., die verhältnismässig schnell abgenützt werden und damit störanfällig, wartungsanspruchsvoll und kostenintensiv sind. Die Vielfalt der einzelnen benötigten mechanischen Teile der bis heute bekannten Verteileinrichtungen hat auch einen Einfluss auf die Grösse dieser Geräte.

Der Erfindung liegt die aufgabe zugrunde, die oben aufgeführten Mängel zu beseitigen.

Dies wird erfindungsgemäss durch die im Anspruch 1 angegebenen Massnahmen erreicht. Weiterbildungen der Erfindung sind in den abhängigen Ansprüchen dargelegt.

Das Wesen der Erfindung ist nachstehend an Hand von in der Zeichnungen schematisch dargestellten Ausführungsbeispielen näher erläutert.

Es zeigen:

Fig 1:  Die Dosiervorrichtung in einer schematischen Gesamtdarstellung.

Fig 2:  Die Dosiervorrichtung in der Ausführung mit einem in dem Füllungsgefäss eingebauten Niveaugeber.

Fig 3:  Die Dosierungsvorrichtung mit einem Flüssigkeitsumschalter.

Fig 4:  Das modifizierte Reservoir der zu dosierenden Flüssigkeit für Entnahme aus einem Durchflusskanal oder einem Behälter.

Fig 5:  Eine Variante des modifizierten Reservoirs mit einem Rückschlagventil bzw. Rückschlagklappe.

Fig 6:  Ein Luftverteiler in einer schematischen Gesamtdarstellung.

Fig 7:  Ein Beispiel der konstruktiven Ausführung des eigentlichen Verteilers mit einer rotierenden Verteildüse.

Fig 8:  Ein Beispiel des Verteilers mit geradliniger Bewegung der Verteildüse.

Fig 9:  Eine Variante der Ausführung der Verteildüse und Entnahmekanäle mit einem Ejektoreffekt.

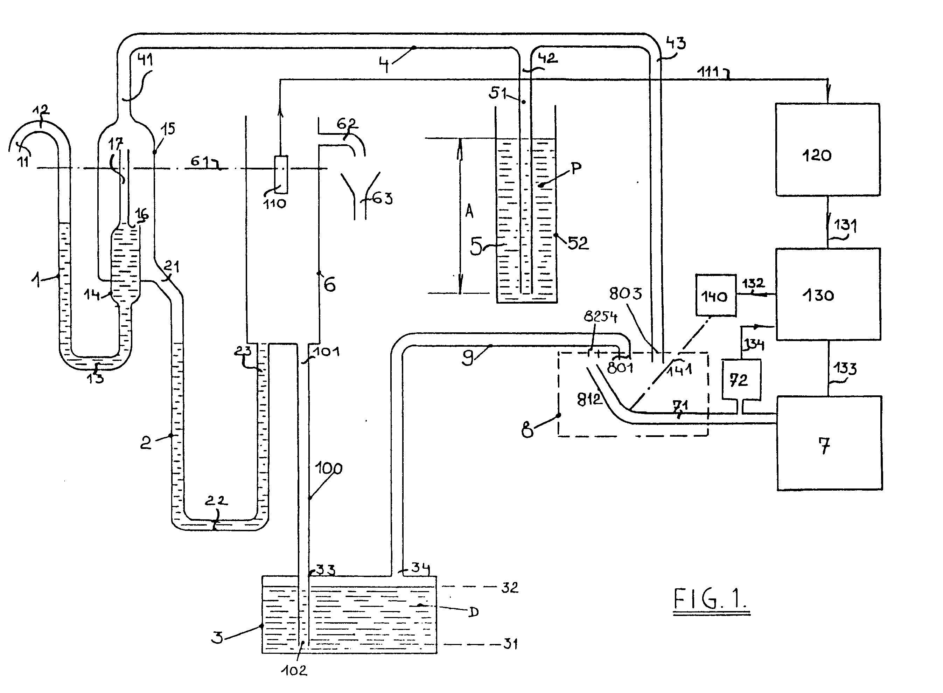

Die Figur 1 zeigt die Dosierungsvorrichtung in einer schematischen Gesemtdarstellung.

Die dargestellte Dosierungsvorrichtung besteht aus einem Dosierungsrohr 1, welches oben eine obere Biegung 12 mit einer in die freie Atmosphäre geöffneten Mündung 11 hat und unten eine untere Biegung 13 besitzt. Oberhalb der unteren Biegung 13 ist an der gegenüber der Mündung 11 liegenden Seite ein Dosierungsgefäss 14 so angeordnet, dass es unterhalb der Mündung 11 liegt. Das Volumen des Dosierungsgefässes 14 bestimmt die Menge, die die Dosierungsvorrichtung dosiert. Das Dosierungsgefäss 14 hat in seinem oberen Teil eine Zuflussöffnung 16 und verjüngt sich oberhalb dieser Zuflussöffnung 16 in ein Entlüftungsrohr 17. Das Dosierungsgefäss 14 und sein Entlüftungsrohr 17 liegen in einem Füllungsgefäss 15. Das Füllungsgefäss 15 ist in seinem unteren Teil an das Zuflussrohr 2 mit der Zuflussmündung 21 angeschlossen. Das Zuflussrohr 2 hat unten eine untere Biegung 22 und mündet mit seinem Verbindungsteil 23 in den Boden des Regelungsgefässes 6. Das Regelungsgefäss 6 ist so plaziert, dass sein Boden unterhalb der Zuflussmündung 21 liegt. Die untere Biegung 22 des Zuflussrohres 2 ist so tief angeordnet, dass die im Zuflussrohr 2 angesammelte Flüssigkeit eine Flüssigkeitssperre für den maximalen in der Dosierungsvorrichtung benötigten Überdruck bildet. Am Boden des Regelungsgefässes 6 ist ein Speiserohr 100 mit seinem oberen Teil 101 angeschlossen, und das Gefäß ist oben mit einem Überlauf 62 ausgerüstet, der in den Abfluss 63 mündet. Der Ansaugteil des Überlaufes 62 ist so plaziert, dass er unterhalb der oberen Biegung 12 des Dosierungsrohres 1 liegt. In dem Regelungsgefäss 6 wird der Flüssigkeitsspiegel geregelt, zu diesem Zweck ist auf dem Niveau des geregelten Flüssigkeitsspiegels 61 ein Niveaugeber 110 untergebracht.

Der Niveaugeber 110 kann nach verschiedenen Prinzipien arbeiten wie z. B. mit einem Schwimmer, photoelektrisch, auf dem Prinzip der elektrischen Leitfähigkeit oder Kapazität, einer Ermittlung der Dielektrizitätskonstanten, mit einem Thermistor.

Der geregelte Flüssigkeitsspiegel 61 liegt unterhalb der oberen Biegung 12 des Dosierungsrohres 1, unterhalb der Öffnung des Entlüftungsrohres 17, unterhalb des Überlaufes 62, unterhalb der Abzweigung 41 des Verbindungsrohres 4 und oberhalb der Zuflussöffnung 16 des Dosierungsrohres 1. Das Speiserohr 100 ist in das Reservoir 3 der zu dosierenden Flüssigkeit D, welches unter dem Bodenniveau des Regelungsgefässes 6 liegt, durch den abgedichteten Durchgang 33 eingeführt. Das Reservoir 3 darf maximal zu dem oberen Spiegelniveu 32 mit der zu dosierenden Flüssigkeit D gefüllt werden. Der untere Teil 102 des Speiserohres 100 liegt unter dem unteren Spiegelniveau 31 der zu dosierenden Flüssigkeit D. Der im oberen Teil des Reservoirs 3 angeordnete Druckluftanschluss 34 ist mittels einer Druckluftleitung 9 an den Ausgang 801 des Luftverteilers 8 angeschlossen. Die Öffnung 8254 des Luftverteilers 8 mündet in die freie Atmosphäre, der Ausgang 803 ist an die Abzweigung 43 des Verbindungsrohres 4 angeschlossen. Die Abzweigung 42 des Verbindungsrohres 4 ist mit dem Tauchrohr 51 eines Überdruckreglers 5 verbunden. Der Überdruckregler 5 besteht in einer möglichen Ausführung aus einem offenen Gefäss 52, das mit einer Hilfsflüssigkeit P gefüllt ist und einem Tauchrohr 51 mit der Eintauchtiefe A. Das Verbindungsrohr 4 ist über die Abzweigung 41 mit dem oberen Teil des Füllungsgefäss 15 verbunden. Die für die Funktion der Dosiervorrichtung notwendige Druckluftverteilung erfolgt mit Hilfe der Verteildüse 812 des Luftverteilers 8, die über die Zuleitung 71 an die Druckluftquelle 7 angeschlossen ist. Die Zuleitung 71 ist weiter mit dem Druckindikator 72 verbunden, von welchem eine Signalleitung 134 zu der Steuereinheit 130 führt.

Die Verteildüse 812 des Luftverteilers 8 wird mittels des Antriebes 140 über die Kupplung 141 bewegt. Die Steuereinheit 130 der gesamten Dosierungsvorrichtung steuert über die Steuerleitung 132 den Antrieb 140 und über die Steuerleitung 133 die Druckluftquelle 7. Der Niveaugeber 110 ist mittels einer Signalleitung 111 über den Messumformer 120 und die Leitung 131 an die Steuereinheit 130 angeschlossen.

Die Dosierungsvorrichtung in der Ausführung gemäss Fig. 1 arbeitet folgendermassen:

Vor der ersten Inbetriebnahme sind das Dosierungsrohr 1, das Zuflussrohr 2 und das Regelungsgefäss 6 leer. Das Reservoir 3 und der Überdruckregler 5 sind mit den entsprechenden Flüssigkeiten (D bzw. P) gefüllt. Am Anfang sind die sämtlichen inneren Räume des Dosierungsrohres 1, des Füllungsgefässes 15, des Zuflussrohres 2, des Verbindungsrohres 4 und auch der Raum oberhalb der zu dosierenden Flüssigkeit D teilweise direkt, teils über den Luftverteiler 8 mit der freien Atmosphäre verbunden.

Nach dem Einschalten der Dosierungsvorrichtung wird die Verteildüse 812 des Luftverteilers 8 durch die Steuereinheit 130 mittels des Antriebes 140 über die Kupplung 141 gegenüber dem Ausgang 801 positioniert. Die Steuereinheit 130 schaltet, nach dieser Positionierung der Verteildüse 812 die Druckluftquelle 7 ein. Der von der Druckluftquelle 7 erzeugte Überdruck gelangt jetzt über die Zuleitung 71, die Verteildüse 812, den Ausgang 801, die Druckluftleitung 9 und den Druckluftanschluss 34 des Reservoirs 3 in den Raum oberhalb der zu dosierenden Flüssigkeit D.

Die Luftdruckquelle 7 liefert den Überdruck in so einem Bereich, dass bei einem Niveaustand der Flüssigkeit D im Reservoir 3 zwischen dem oberen Spiegelniveau 32 und dem unteren Spiegelniveau 31 eine sichere Füllung der Dosiervorrichtung bis zu dem Niveau des geregelten Flüssigkeitsspiegels 61 gewährleistet ist.

Der notvendige Überdruck für die Förderung der Flüssigkeit D aus dem Reservoir 3 bis zu dem geregelten Flüssigkeitsspiegel 61 ist umgekehrt proportional zu dem Flüssigkeitstand im Reservoir 3. Diese Tatsache wird zur Kontrolle des Flüssigkeitstandes im Reservoir 3 mit Hilfe des Druckindikators 72 genützt.

Bei einem leeren Reservoir 3 bzw. bei einem Niveaustand unterhalb des unteren Spiegelniveaus 31 fällt der gelieferte Überdruck praktisch auf Null, was mittels des Druckindikators 72 zur Alarmausgabe ausgewertet werden kann.

Die Flüssigkeit D wird durch den Überdruck aus dem Reservoir 3 über das Speiserohr 100 in das Regelungsgefäss 6 hineingedrückt. Das Regelungsgefäss 6 und das mit ihm durch das Zuflussrohr 2 verbundene Füllungsgefäss 15 werden mit der Flüssigkeit D gefüllt. Wenn das Niveau der Flüssigkeit D in dem Füllungsgefäss 15 das Niveau der Zuflussöffnung 16 des Dosierungsgefässes 14 erreicht hat, wird auch das Dosierungsgefäss 14 und damit auch das Dosierungsrohr 1 gefüllt. Die in das Dosierungsgefäss 14 eindringende Flüssigkeit D drückt die sich im Inneren des Dosierungsgefässes 14 befindende Luft einerseits über das Dosierungsrohr 1 und die Mündung 11, anderseits über das Entlüftungsrohr 17, die Abzweigung 41, das Verbindungsrohr 4 und den Ausgang 803 und die Öffnung 8254 des Luftverteilers 8 in die freie Atmosphäre. Damit wird die Bildung der Luftblasen unterbunden.

Der Füllvorgang dauert so lange, bis das Niveau der Flüssigkeit D in dem Regelungsgefäss 6, dem Füllungsgefäss 15 und dem Dosierungsrohr 1 mit seinen Teilen (Dosierungsgefäss 14, Entlüftungsrohr 17) das Niveau des geregelten Flüssigkeitsspiegels 61 erreicht hat.

Nach dem Erreichen des geregelten Flüssigkeitsspiegels 61 wird die Steuereinheit 130 von dem Niveaugeber 110 über die Signalleitung 111, den Messumformer 120 und die Leitung 131 so angeregt, dass die Steuereinheit 130 über die Steuerleitung 133 die Druckluftquelle 7 abschaltet und dann den Antrieb 140 über die Steuerleitung 132 so steuert, dass die Verteildüse 812 des Luftverteilers 8 so eine Lage annimmt, dass die Ausgänge 801 und 803 über die Öffnung 8254 mit der freien Atmosphäre verbunden sind. Damit kann die beim Füllvorgang in der Druckluftleitung 9 und dem Reservoir 3 komprimierte Luft in die freie Atmosphäre entweichen. Das hat einen Rückfluss der Flüssigkeit D aus dem Regelungsgefäss 6, dem Füllungsgefäss 15, dem Entlüftungsrohr 17, dem Dosierungsgefäss 14, dem Dosierungsrohr 1 und dem Zuflussrohr 2 in das Reservoir 3 zur Folge.

Das Dosierungsgefäss 14 bleibt nach der vollständigen Entleerung des Füllungsgefässes 15 bis zu dem Niveau der Zuflussöffnung 16 gefüllt: Dies gilt auch für die andere Seite des Dosierungsrohres 1.

Das Zuflussrohr 2 bleibt nach der vollständigen Entleerung des Regelungsgefässes 6 bis zu dem Niveau der Mündung seines Verbindungsteiles 23 in das Regelungsgefäss 6 mit der Flüssigkeit D gefüllt, die eine für die weitere Funktion der Dosierungvorrichtung notwendige Flüssigkeitssperre bildet.

Nach der automatischen Stabilisierung der inneren Flüssigkeitsspiegel, wie oben beschrieben, wird die Verteildüse 812 des Luftverteilers 8 gegenüber den Ausgang 803 positioniert. Anschliessend wird die Druckluftquelle 7 eingeschaltet. Damit dringt die von der Druckluftquelle 7 erzeugte Druckluft über die Zuleitung 71, die Verteildüse 812 und den Ausgang 803 in das Verbindungsrohr 4 ein. Die Druckluft dringt über die Abzweigung 42 des Verbindungsrohres 4 in das Tauchrohr 51 des Überdruckreglers 5 ein und sprudelt, nach Erreichen der entsprechenden Grösse, durch die Hilfsflüssigkeit P in die freie Atmosphäre. Durch die Wirkung des Überdruckreglers 5 stellt sich ein geregelter Überdruck ein, dessen Grösse durch die Eintauchtiefe A des Tauchrohres 51 und durch das spezifische Gewicht der Hilfsflüssigkeit P gegeben ist. Der Überdruckregler kann auch in Form eines Membranreglers, Schwimmreglers usw. ausgeführt sein.

Der geregelte Überdruck wirkt über die Abzweigung 41 des Verbindungsrohres 4 auf die in dem Dosierungsgefäss 14 des Dosierungsrohres 1 angesammelte Flüssigkeit D und auch auf die Flüssigkeit im Zuflussrohr 2, die eine Flüssigkeitssperre für den Überdruck bildet. Dadurch wird eine bestimmte Menge der angesammelten Flüssigkeit D aus dem Dosierungsgefäss 14 über die Mündung 11 des Dosierungsrohres 1 herausgedrückt. Die gewünschte herausgedrückte Menge der Flüssigkeit D ist durch das Volumen des Dosierungsgefässes 14 und durch den eingestellten geregelten Überdruck gegeben.

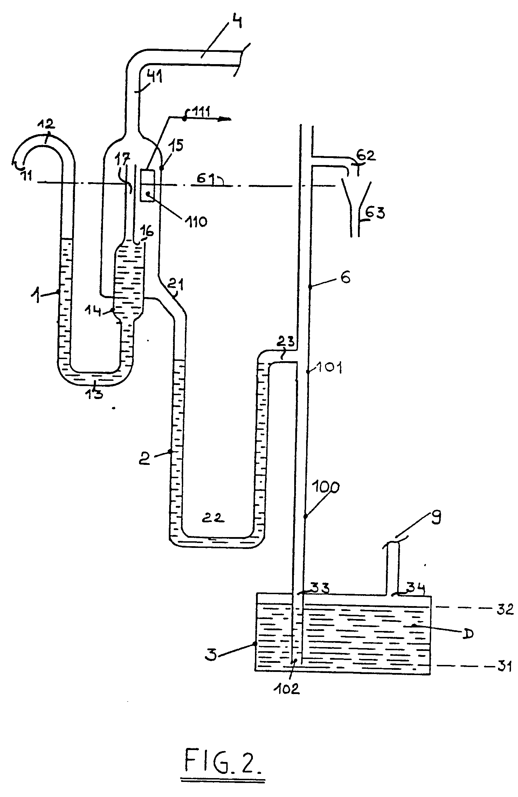

In Figur 2 ist eine Ausführung der Dosierungsvorrichtung dargestellt, bei welcher das Regelungsgefäss 6 den gleichen Durchmesser wie das Speiserohr 100 hat. Das Zuflussrohr 2 ist mit seinem Verbindungsteil 23 als eine Abzweigung an der Stelle des Übergangs von dem oberen Teil 101 des Speiserohres 100 in das untere Teil des Regelungsgefässes 6 angeschlossen. In diesem Falle ist der Niveaugeber 110 direkt in dem Füllungsgefäss 15 auf dem Niveau des geregelten Flüssigkeitsspiegels 61 untergebracht.

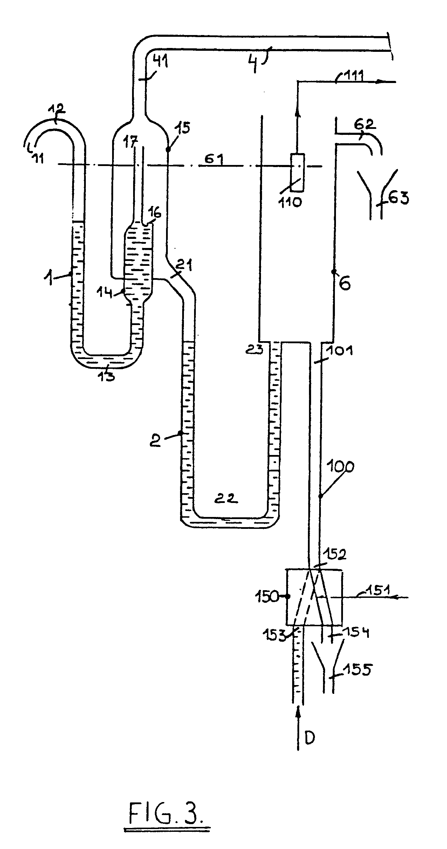

Die Figur 3 zeigt eine alternative Ausführung der Dosierungsvorrichtung mit der Entnahme der zu dosierenden Flüssigkeit D von einer unter Druck stehenden Leitung. Bei dieser Alternative erfolgt die Füllung des Regelungsgefässes 6 mit Hilfe eines Flüssigkeitsumschalters 150, der mittels einer Steuerleitung 151 an die Steuereinheit 130 angeschlossen ist. Der Flüssigkeitsumschalter 150 hat einen Ausgang 152, der an das Speiserohr 100 angeschlossen ist, einen Eingang 153, der mit der unter dem Druck stehenden Leitung mit der Flüssigkeit D verbunden ist und den Ausgang 154 der in den Abfluss 155 mündet. Bei dieser Ausführung der Dosierungsvorrichtung entfällt gegenüber der Ausführung nach Fig. 1 das Reservoir 3, die Druckluftleitung 9. Der Ausgang 801 des Luftverteilers 8 wird hier nicht benützt. Bis auf die Füllung des Regelungsgefässes 6 aus dem Reservoir 3 arbeitet die Dosiervorrichtung identisch wie die Dosierungsvorrichtung gemäss Figur 1. Das Regelungsgefäss 6 bzw. die ganze Dosiervorrichtung wird direkt von der Druckleitung über den Flüssigkeitsumschalter 150 gefüllt, wenn die Steuereinheit 130 über die Steuerleitung 151 den Umschalter 150 so steuert, dass der Weg zwischen dem Eingang 153 und dem Ausgang 152 offen ist. Dieser Weg bleibt so lange offen, bis der Füllvorgang beendet ist und das Niveau des geregelten Flüssigkeitsspiegels 61 erreicht ist. Die Steuereinheit 130 gibt dann nach der Anregung durch Niveaugeber 110 ein Steuerbefehl an den Flüssigkeitsumschalter 150 so, dass jetzt der Weg vom Ausgang 152 zu dem Ausgang 154 offen ist und die Flüssigkeit D aus der Dosierungsvorrichtung herausfliessen kann. Nach der automatischen Stabilisierung der inneren Flüssigkeitsspiegel, wie beschrieben, arbeitet die Dosierungsvorrichtung nach Fig. 3 absolut identisch wie die Dosierungsvorrichtung nach Fig. 1.

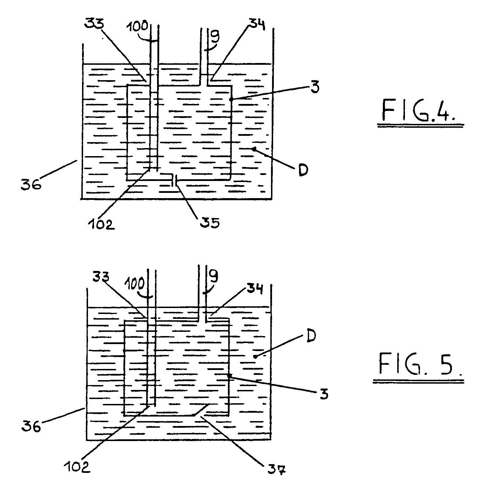

In Figur 4 ist ein modifiziertes Reservoir 3 dargestellt, das eine Entnahme der zu dosierenden Flüssigkeit D aus einem Durchflusskanal oder aus einem grösseren Behälter 36 erlaubt. Das Reservoir 3 hat in seinem Boden eine Öffnung 35, die das Eindringen der zu dosierenden Flüssigkeit D in das Reservoir 3 ermöglicht. Die Öffnung 35 ist so dimensioniert und die Eintauchtiefe des Reservoirs 3 so gewählt, dass eine einwandfreie Funktion bei der Füllung der Dosiervorrichtung, wie oben beschrieben, gewährleistet ist.

In Figur 5 ist eine Variante des modifizierten Reservoirs 3 gemäss Figur 4 dargestellt, bei welcher anstatt der Öffnung 35 ein Rückschlagventil (Klappe) 37 zur Anwendung kommt.

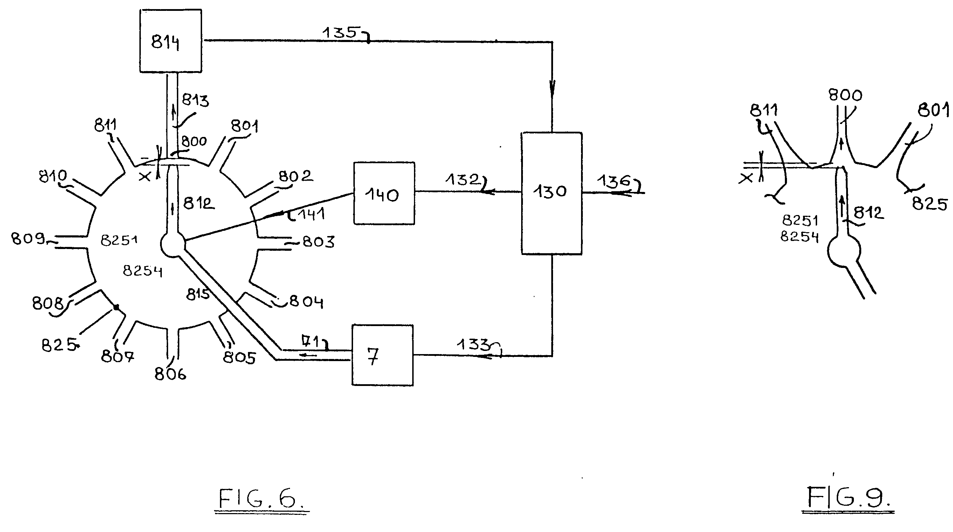

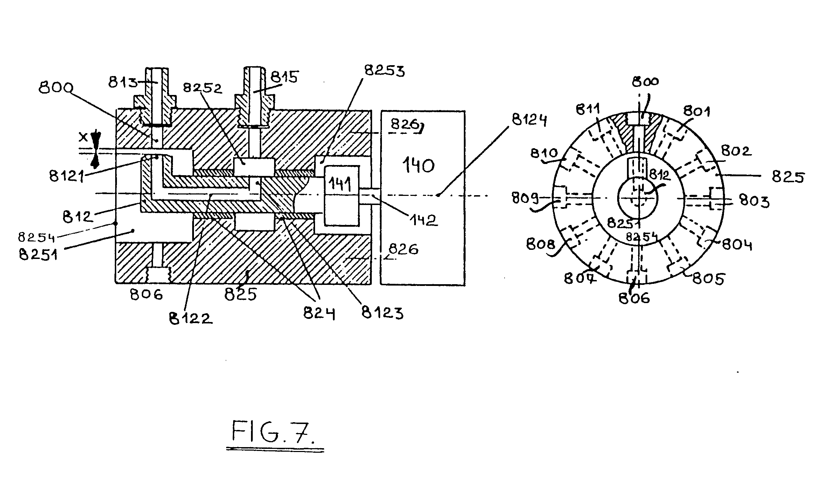

Der Luftverteiler in Figur 6 und 7 besteht aus einem Stator 825 mit einem Referenzkanal 800 und symmetrisch angeordneten Ausgängen 801 bis 811, in dem durch eine Öffnung 8254 in die freie Atmosphäre geöffneten Verteilraum 8251 des Stators 825 ist eine rotierend bewegliche Verteildüse 812 angeordnet.

Die Verteildüse 812 ist im Kupplungsraum 8253 des Stators 825 mittels einer Kupplung 141 mit der Welle 142 des Antriebes 140 verbunden. Der Antrieb 140 ist mechanisch mit dem Stator 825 durch die Befestigungselemente 826 verbunden.

Der Referenzkanal 800 ist mit Hilfe des Verbindungsrohres 813 an den Indikator 814 der Referenzstellung angeschlossen. Die Ausgänge 801 bis 811 des Luftverteilers 8 sind mit den Stellen verbunden, wo die zu verteilende Druckluft benötigt wird.

Die Verteildüse 812 hat einen Durchgangskanal 8122 mit der Eingangsöffnung 8123 und der Mündung 8121. Der Hohlraum 8252 ist über den Ausgang 815 des Luftverteilers 8 und über die Zuleitung 71 an die Druckluftquelle 7 angeschlossen.

Die Eingangsöffnung 8123 der rotierend beweglichen Verteildüse 812 und der Hohlraum 8252 sind gegenüber den anderen Räumen des Stators 825 mit den Dichtungen 824 abgedichtet. Die Mündung 8121 der Verteildüse 812 ist so angeordnet, dass die Mittelpunkte der Öffnungen des Referenzkanals 800 und der Ausgänge 801 bis 811 des Luftverteilers 8 in der gleichen Ebene wie die Achse durch den Mittelpunkt der Mündung 8121 senkrecht zur Rotationsachse 8124 der Verteildüse 812 liegen. Der Abstand X zwischen der Oberfläche des Verteilraumes 8251 und der Mündung 8121 der Verteildüse 812 ist durch den erlaubten Druckverlust, die Strömungsgeschwindigkeit und die Druckluftmenge gegeben.

Der Indikator 814 der Referenzstellung z. B. in Ausführung als Druckfühler oder Mikrofon, führt mittels einer Signalleitung 135 ein Signal an die Steuereinheit 130. Die Steuereinheit 130 steuert über die Steuerleitung 132 den Antrieb 140 und über die Steuerleitung 133 die Druckluftquelle 7. Die Funktion der Steuereinheit 130 kann über den Steuereingang 136 von den eventuellen übergeordneten Einrichtungen bestimmt werden.

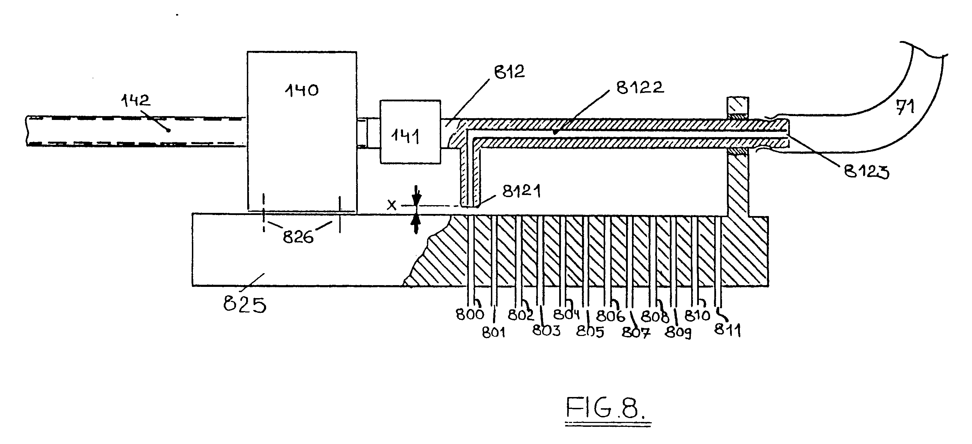

In Fig. 8 ist eine Variante des Verteilers in der Ausführung mit einer sich geradling bewegenden Verteildüse 812 dargestellt. Bei dieser Variante ist der Antrieb 140 so ausgeführt, dass die Welle 142 eine geradlinge Bewegung durchführt. Die zu der Verteildüse 812 zugewandte Oberfläche des Stators 825 ist in diesem Falle eben. Die Öffnungen des Referenzkanals 800, der Ausgänge 801 bis 811 des Luftverteilers 8 und die Mündung 8121 der Verteildüse 812 liegen voneinander im Abstand X. Die Verteildüse 812 ist in diesem Falle direkt mittels einer flexiblen Zuleitung 71 an die Druckluftquelle 7 angeschlossen.

In der Fig. 9 wird eine mögliche Ausführung der Verteildüse 812 und der Ausgänge 801 bis 811 des Luftverteilers 8 mit konisch ausgeführten Öffnungen gezeigt.

Der Verteiler in der Ausführung gemäss Fig. 6 und 7 funktioniert folgendermassen:

Beim Einschalten des Verteilers oder nach Bedarf wird der Antrieb 140 und die Druckluftquelle 7 eingeschaltet. In diesem Anfahrzyklus ist die Druckluftquelle 7 so gesteuert, dass sie nur so einen Luftdruck liefert, der gerade das sichere Ansprechen des Indikators der Referenzstellung 814 bewirkt und ohne Folge an die mit den Ausgängen 801 bis 811 des Luftverteilers 8 zu verbindenden Stellen ist. Nach den Einschalten wird die Verteildüse 812 über die Welle 142 und die Kupplung 141 in Bewegung gebracht. Wenn die Mündung 8121 der Verteildüse 812 die Stellung der Öffnung des Referenzkanals 800 erreicht und der Indikator der Referenzstellung 814 das Drucksignal erkennt, wird von diesem ein Signal über die Signalleitung 135 an die Steuereinheit 130 ausgegeben. Die Steuereinheit 130 bewirkt damit die Bewegung des Antriebes 140 so, dass die Mündung 8121 der Verteildüse 812 gegenüber der Öffnung des Referenzkanals 800 stehen bleibt, gleichzeitig wird dann auch die Druckluftquelle 7 abgeschaltet. Durch diesen Anfahrzyklus wird die eindeutige Ausgangslage für die weitere Funktion des Verteilers definiert. Die gewünschte Verteilung findet folgendermassen statt: Zuerst erfolgt die Positionierung der Verteildüse 812 zu dem entsprechenden Ausgang 801 bis 811 des Luftverteilers 8 mittels Bewegung des Antriebes 140, der die Steuerbefehle über die Steuerleitung 132 von der Steuereinheit 130 enthält. Erst nach Erreichen der gewünschten Position wird von der Steuereinheit 130 über die Steuerleitung 133 die Druckluftquelle 7 eingeschaltet und die von der Steuereinheit 130 vorgegebene Druckluftzufuhr in einen von den Ausgängen 801 bis 811 des Luftverteilers 8 beginnt. Die restlichen Ausgänge des Luftverteilers 8 sind mit der freien Atmosphäre verbunden.

Der Verteiler in der Ausführung gemäss Fig. 8 arbeitet wie die oben beschriebene Ausführung nach Fig. 6 und 7 mit dem Unterschied, dass die Verteildüse 812 anstatt einer rotierenden eine geradlinige Bewegung durchführt.

Die in Fig. 9 dargestellte Ausführung der Verteildüse 812, des Referenzkanals 800 und der Ausgänge 801 bis 811 des Luftverteilers 8 arbeitet nach dem Ejektorprinzip. Bei dieser Variante stellt sich die bekannte Saugwirkung ein, die dem Verlust des zu verteilenden Mediums entgegenwirkt.

Die Druckluftquelle kann nach einem beliebigen Prinzip arbeiten, sie muss nur regelbar sein.

Die oben beschriebenen Beispiele zeigen die Ausführungen mit einem Referenzkanal und elf Ausgängen des Luftverteilers. Es sind Ausführungen mit einer beliebigen Anzahl der Kanäle möglich.

Der Indikator der Referenzstellung des Luftverteilers kann auch nach einem anderen Prinzip, z. B. fotoelektrisch, magnetisch oder mechanisch arbeiten.

Der beschriebene Luftverteiler kann mit Ventilen, Klappen, Nocken, Schiebern etc. oder als ein motorischer Luftverteiler ausgeführt sein.

Für die Bewegung der Verteildüse des Luftverteilers kann man einen Schrittmotor und auch sämtliche bekannte Antriebe einsetzen, sie müssen aber eine Rückmeldung ihrer Wellenposition an die Steuereinheit abgeben.

Die Dosiervorrichtung nach der Erfindung hat die Eigenschaft, dass sich die inneren Flüssigkeitsspiegel automatisch und selbständig einstellen, womit eine von der Flüssigkeitsmenge im Reservoir und von den Spiegelschwankungen unabhängige und genaue Dosierung möglich ist.

Durch die Art der Füllung und die Konstruktion des Dosierungsgefässes wird eine Bildung der Luftblasen unterbunden und damit eine genaue Dosierung der kleinsten Mengen ermöglicht.

Die Dosierungsvorrichtung arbeitet zuverlässig bereits nach der ersten Einschaltung ohne der Notwendigkeit einer manuellen Erstfüllung der inneren Teile.

Das Reservoir der zu dosierenden Flüssigkeit ist unterhalb der Dosierungsvorrichtung angeordnet und kann damit grössere Dimensionen haben.

Der Flüssigkeitsstand des Reservoirs kann bei jedem Dosierungszyklus automatisch durch einfache Luftdruckmessung überwacht werden.

Die Dosierungsvorrichtung ermöglicht auch eine Dosierung von Flüssigkeiten aus grossen Behältern, Durchflusskanälen und unter Druck stehenden Leitungen.

Die Vorrichtung nach der Erfindung findet Verwendung in der Chemie und ihr verwandter Gebiete, bei der Konstruktion verschiedener Apparate, chemischen Analysatoren, Füllungsmaschinen usw.

## Patentansprüche

1. Vorrichtung zum Dosieren von Flüssigkeiten, die durch die pneumatische Einwirkung mittels geregelter Druckluft freigegeben wird, bei der ein Dosierungsgefäss (14) über ein U-förmiges Dosierungsrohr (1) in die Atmosphäre mündet, dadurch gekennzeichnet, dass das Dosierungsgefäss (14) mindestens teilweise in einem Füllungsgefäss (15) angeordnet ist,

(a) in seinem oberen Teil eine Zuflussöffnung (16) aufweist und ein oberhalb der Zuflussöffnung (16) endendes Entlüftungsrohr (17) hat, oder

(b) oben offen ist, wobei diese Öffnung gleichzeitig zur Entlüftung dient und eine Zuflussöffnung bildet, bei der das Füllungsgefäss (15) in seinem unteren Teil mittels eines U-förmigen Zuflussrohres (2) am unteren Teil eines im oberen Teil zu Atmosphäre hin offenen Regelungsgefässes (6) angeschlossen ist, bei der an den unteren Teil des Regelungsgefässes (6) eine Flüssigkeitsquelle für die zu dosierende Flüssigkeit (D) über ein Speiserohr (100) angeschlossen ist, bei der ein das Niveau des geregelten Flüssigkeitsspiegels (61) überwachender Niveaugeber (110) vorhanden ist, der über eine Signalleitung (111), einen Messumformer (120) und eine Leitung (131) mit einer Steuereinheit (130) zur Regelung des Flüssigkeitsspiegels (61) im Regelungsgefäss (6), im Dosierungsrohr (1) und im Füllungsgefäss (15) verbunden ist, wobei der Flüssigkeitsspiegel (61) oberhalb der Zuflussöffnung (16) und im Falle (a) unterhalb des oberen Endes des Entlüftungsrohres (17) liegt, und bei der die Steuereinheit (130) mit einer geregelten Druckliefernden Quelle (7, 8) verbunden ist, die mittels eines Verbindungsrohres (4) an das Füllungsgefäss (15) angeschlossen ist.

2. Vorrichtung nach Anspruch 1, dadurch gekennzeichnet, dass die Flüssigkeitsquelle mit der zu dosierenden Flüssigkeit (D) ein Reservoir (3) umfasst, welches unterhalb der übrigen Teile der Dosierungsvorrichtung (1, 2, 6, 11 - 17), die mit der zu dosierenden Flüssigkeit in Berührung kommen, angeordnet ist, daß das Reservoir (3) über das Speiserohr (100) an das Regelungsgefäss (6) angeschlossen ist und daß das Reservoir (3) mit der geregelten Druck liefernden Quelle (7, 8) verbunden ist.

3. Vorrichtung nach Anspruch 1, dadurch gekennzeichnet, dass die Flüssigkeitsquelle für die zu dosierende Flüssigkeit (D) ein Rohr mit unter Überdruck stehender zu dosierender Flüssigkeit (D) umfasst, daß diese

6

Flüssigkeitsquelle über einen Flüssigkeitsumschalter (150) und das Speiserohr (100) mit dem Regelungsgefäss (6) verbunden ist, wobei der Flüssigkeitsumschalter (150) durch die Steuereinheit (130) gesteuert wird.

4. Vorrichtung nach einem der Ansprüche 1 bis 3, dadurch gekennzeichnet, dass die geregelten Druck liefernde Quelle eine Druckluftquelle (7) und einen Luftverteiler (8) hat, daß die Druckluftquelle (7) über eine Zuleitung (71) mit einer Verteildüse (812) des Luftverteilers (8) verbunden ist, daß eine Steuereinheit (130) über Steuerleitungen (133, 132) die Druckluftquelle (7) und einen Antrieb (140) steuert, daß der Antrieb mittels einer Kupplung (141) mit der Verteildüse (812) verbunden ist, wobei die Verteildüse (812) über einen oder mehrere Ausgänge des Luftverteilers (8) sequentiell positionierbar ist und daß die Verteildüse (812) mit ihrer Mündung (8121) in einem Raum liegt, der mit der Atmosphäre verbunden ist.

5. Vorrichtung nach einem der Ansprüche 1 bis 4, dadurch gekennzeichnet, dass das Regelungsgefäss (6) in seinem oberen Teil einen Überlauf (62) aufweist.

6. Vorrichtung nach einem der Ansprüche 1, 2, 4 und 5, dadurch gekennzeichnet, dass ein Reservoir (3), welches in einem Durchflusskanal oder einem Behälter (36) angeordnet ist, eine Öffnung (35), ein Rückschlagventil oder eine Klappe (37) hat.

7. Vorrichtung nach einem der Ansprüche 4 bis 6, dadurch gekennzeichnet, dass an die Zuleitung (71) ein Druckindikator (72) angeschlossen ist, der über eine Signalleitung (134) mit der Steuereinheit (130) verbunden ist.

8. Vorrichtung nach einem der Ansprüche 1 bis 7, dadurch gekennzeichnet, dass eine Verteildüse (812) des Luftverteilers (8) eine Eingangsöffnung (8123), einen Durchgangskanal (8122) und eine Mündung (8121) aufweist und beweglich in einem Stator (825), der einen Referenzkanal (800) und Ausgänge (801 bis 811) enthält, derart angebracht ist, dass die Mündung (8121) der Verteildüse (812) einen bestimmten Abstand (X) von der Oberfläche eines Verteilraumes (8251) des Stators (825) besitzt, daß der Verteilraum (8251) durch eine Öffnung (8254) in die Atmosphäre geöffnet ist, daß die Verteildüse (812) über einen abgedichteten Hohlraum (8252) des Stators (825) und eine Zuleitung (71) an eine durch die Steuereinheit (130) gesteuerte Druckluftquelle (7) angeschlossen ist, und daß die Verteildüse (812) mittels einer Kupplung (141) mit einer Welle (142) eines Antriebes (140) verbunden ist, der von der Steuereinheit (130) gesteuert wird.

9. Vorrichtung nach einem der Ansprüche 1 bis 7, dadurch gekennzeichnet, dass eine Verteildüse (812) des Luftverteilers (8) eine Eingangsöffnung (8123), einen Durchgangskanal (8122) und eine Mündung (8121) aufweist und geradlinig relativ zu einem Stator (825), der einen Referenzkanal (800) und Ausgänge (801 bis 811) enthält, bewegbar ist und so angebracht ist, dass die Mündung (8121) der Verteildüse (812) einen bestimmten Abstand (X) von dem Stator (825) besetzt, daß die Verteildüse (812) über eine flexible Zuleitung (71) an eine durch die Steuereinheit (130) gesteuerte Druckluftquelle (7) angeschlossen ist und daß die Verteildüse (812) mittels einer Kupplung (141) mit einer Welle (142) eines Antriebes (140) verbunden ist, der von einer Steuereinheit (130) gesteuert wird.

10. Vorrichtung nach Anspruch 8 oder 9, dadurch gekennzeichnet, dass der Referenzkanal (800) des Luftverteilers (8) an einen Indikator (814) angeschlossen ist, und daß der Indikator (814) über eine Signalleitung (135) mit einer Steuereinheit (130) verbunden ist.

11. Vorrichtung nach einem der Ansprüche 1 bis 10, dadurch gekennzeichnet, dass eine Verteildüse (812) mittels einer Kupplung (141) mit einer Welle (142) eines Antriebes (140) - z. B. eines Schrittmotors - verbunden ist, der eine Rückmeldeeinrichtung seiner Wellenposition hat, und daß die Rückmeldeeinrichtung an eine Steuereinheit (130) angeschlossen ist.

12. Vorrichtung nach einem der Ansprüche 8 bis 11, dadurch gekennzeichnet, dass der Referenzkanal (800) und die Ausgänge (801 bis 811) des Luftverteilers (8) konisch ausgeführt sind, wobei sie sich vom Innern des Stators (825) nach aussen verjüngen.

**Claims**

1. Device for dispensing doses of liquid of which a liquid is released by pneumatic action of controlled air pressure, having a dispensing tank (14) which is opened into the atmosphere via an U-shaped dispensing pipe (1), characterised in that at least a part of the dispensing tank (14) is situated in a filling bulb (15)

(a) has on its upper part an inlet opening (16) and has above said inlet opening (16) a vent pipe (17), or

(b) its upper part is open, where said opening forming both the vent pipe and the inlet opening and that the filling bulb (15) is connected at its bottom by means of an U-shaped inlet pipe (2) to the lower part of a regulation tank (6) of which the upper part is opened to the atmosphere and that the lower part of the regulation tank (6) opens into a liquid source for the dosed liquid (D) by means of a supply pipe (100) and that a level indicator (110) controlling a liquid level (61), being connected via a signal line (111), a measuring transducer (120) and a line (131) to a control unit (130) controlling the liquid level (61) in the regulation tank (6), in the dispensing pipe (1) and in the filling bulb (15), where the liquid level (61) is above the level of the inlet opening (16) and in the case (a) is under the level of the upper part of the vent pipe (17) and that the control unit (130) being connected to a controlled pressure source (7, 8), which is connected by means of a connection pipe (4) to the filling bulb (15).

2. Device for dispensing doses of liquid according Claim 1 characterised in that the liquid source for the dosed liquid (D) consists of a reservoir (3) which is situated under the level of further dosing parts (1, 2, 6, 11 - 17), going in touch with the dosed liquid, where the reservoir (3) opens into the regulation tank (6) by means of the supply pipe (100) and that the reservoir (3) is connected to the controlled air source (7, 8).

3. Device for dispensing doses of liquid according to Claim 1 characterised in that the liquid source for the dosed liquid (D) consists of a pipe containing the overpressured liquid (D) and that said liquid source opens into the regulation tank (6) via a flow reversal switch (150) and the supply pipe (100), and that the flow reversal switch (150) being controlled by the control unit (130).

4. Device for dispensing doses of liquid according to one of Claims 1 to 3 characterised in that the controlled pressure source comprises a compressed air source (7) and an air distributor (8), where the compressed air source (7) is connected by means of an inlet pipe (71) to a distibutor nozzle (812) of the air distributor (8) and that the control unit (130) controls via lines (133, 132) the air source (7) and a drive (140) and that the drive being connected to the distributor nozzle (812) by means of a coupling (141), where the distributor nozzle (812) is sequentionally positioned to one or more outlets of the air distributor (8) and that an opening (8121) of the distibutor nozzle (812) is situated in a cavity opened to the atmosphere.

5. Device for dispensing doses of liquid according to Claims 1 to 4 characterised in that the regulation tank (6) being equiped on, its upper part with an overflow (62).

6. Device for dispensing doses of liquid according to Claims 1, 2, 4 and 5 characterised in that a reservoir (3) which is placed in a flow channel or in a receptacle (36) and communicates therewith via an opening (35) or via a reflux valve or a flap trap (37).

7. Device for dispensing doses of liquid according to Claims 4 to 6 characterised in that a pressure indicator (72) is connected to the inlet (71), which is connected to the control unit (130) via a signal line (134).

8. Device for dispensing doses of liquid according to Claims 1 to 7 characterised in that the distributor nozzle (812) of the air distributor (8) comprises an inlet opening (8123), a flow channel (8122) and an outlet opening (8121) and is moveably fited in a stator (825) comprising a reference channnel (800) outlets (801 to 811) such that the opening (8121) of the distributor nozzle (812) is at a distance (X) from an upper surface of a distributor chamber (8251) of the stator (825), the distributor chambre (8251) is through the opening (8254) opened into the atmosphere, the distributor nozzle (812) being connected via sealed cavity (8252) of the stator (825) and the inlet (71) to the compressed air source (7), the distributor nozzle (812) being connected by means of the coupling (141) to a shaft (142) of a drive (140), which is controlled by the control unit (130).

9. Device for dispensing doses of liquid according to Claims 1 to 7 characterised in that the distributor nozzle (812) of the air distributor (8) moves linearly with an inlet opening (8123), a flow channel (8122) and the opening (8121) is moveably fitted against a stator (825) comprising of a reference channel (800) and outlets (801 to 811) in such a way that the opening (8121) of the distributor nozzle (812) is at the distance (X) from the stator (825), the distributor nozzle (812) being connected to the compressed air source (7) controlled by the control unit (130) by means of a flexible inlet pipe (71), the distributor nozzle (812) being connected via a coupling (141) to a shaft (142) of a drive (140) which is controlled by the control unit (130).

10. Device for dispensing doses of liquid according to Claim 8 or 9 characterised in that the air distributor (8) comprises a reference channel (800) and is connected to the control unit (130) by means of a reference point indicator (814) and a signal line (135).

11. Device for dispensing doses of liquid according to Claims 1 to 10 characterised in that the distributor nozzle (812) is connected by means of a coupling (141) to a shaft of a drive (140) for example of a step motor, which has a system for acknowledging its shaft position, which is connected to a control unit (130).

12. Device for dispensing doses of liquid according to Claims 8 to 11 characterised in that the reference channel (800) and outlets (801 to 811) of the air distributor (8) have a conical form and being narrow from the inside of the stator (825) to the outside of the stator.

**Revendications**

1. Dispositif de dosage de liquides, declenché par effet pneumatique, au moyen d'air comprimé réglé, dans lequel un récipient de dosage (14) débouche à l'atmosphère, par un tube de dosage (1) en forme de U, caractérisé en ce que le récipient de dosage (14) est disposé au moins partiellement dans un recipient de remplissage (15),

(a) possède un orifice d'alimentation (15) à sa partie supérieure et un tube de désaération (17) se terminant au-dessus de l'orifice d'alimentation (16), ou

(b) est ouvert sur le dessus, cette ouverture servant à cette occasion simultanément à la désaération et formant un orifice d'alimentation. dans lequel le récipient de remplissage (15) est raccordé en sa partie inférieure, au moyen d'un tube d'alimentation (2) en forme de U, sur la partie supérieure d'un récipient de réglage (6) ouvert vers l'atmosphère à la partie supérieure, pour lequel une source de liquide, pour le liquide à doser (D), est raccordée par un tube d'alimentation (100), à la partie inférieure du récipient de réglage (6), dans lequel il y a un transmetteur de niveau (110), contrôlant la hauteur du niveau de liquide (61) réglé, qui est réglé à une unité de commande (130), par une ligne de signalisation (111), un convertisseur de mesure (120) et une ligne (131), pour régler le niveau de liquide (61) dans le récipient de réglage (6), dans le tube de dosage (1) et dans le récipient de remplissage (15), le niveau de liquide (61) étant à cette occasion situé au-déssus de l'orifice d'alimentation (16) et, dans le cas (a), sous l'extrémité supérieure du tube de désaération (17), et dans lequel l'unité de commande (130) est reliée à une source (7, 8) délivrant une pression réglée, qui est raccordée au récipient de remplissage, au moyen d'un tube de liaison (4).

2. Dispositif selon la revendication 1, caractérisé en ce que la source de liquide, avec le liquide (D) à doser, comprend un réservoir (3), qui est disposé au-dessous des autres parties du dispositif de dosage (1, 2, 6, 11 à 17), qui sont au contact du liquide à doser, que le réservoir (3) est raccordé au récipient de réglage (6), par le tube d'alimentation (100) et que le réservoir (3) est relié à la source (7, 8) délivrant la pression réglée.

3. Dispositif selon la revendication 1, caractérisé en ce que la source de liquide, pour le liquide (D) à doser, comprend un tube, avec le liquide (D) à doser soumis à une dépression, que cette source de liquide est reliée au récipient de réglage (6), par un commutateur de liquide (150) et le tube d'alimentation (100), le commutateur de liquide (150) étant à cette occasion commandé par l'unité de commande (130).

4. Dispositif selon l'une des revendications 1 à 3, caractérisé en ce que la source délivrant la pression réglée possède une source d'air comprimé (7) et un répartiteur d'air (8), que la source d'air comprimé (7) est reliée, par une conduite d'alimentation (71), à une buse de répartition (812) du répartiteur d'air (8), qu'une unité de commande (130) commande la source d'air comprimé (7) et un entraînement (140), en passant par des lignes de commande (133, 132), que l'entraînement est relié à la buse de répartition (812), au moyen d'un accouplement (141), la buse de répartition étant à cette occasion susceptible d'être positionnée de manière séquentielle, sur une ou plusieurs sorties du répartiteur d'air (8) et que la buse de répartition (812) est située avec son embouchure (8121), dans un espace qui est relié à l'atmosphère.

5. Dispositif selon des revendications 1 à 4, caractérise en ce que le récipient de réglage (6) comprend en sa partie supérieure un trop-plein (62).

6. Dispositif selon l'une des revendications 1, 2, 4 et 5, caractérisé en ce qu'un réservoir (3), qui est disposé dans un canal d'écoulement ou bien un réservoir (36), possède un orifice (35), une soupape anti-retour ou bien un clapet (37).

7. Dispositif selon l'une des revendications 4 à 6, caractérisé en ce qu'un indicateur de pression (72) est raccordé à la conduite d'alimentation (71), qui est reliée à l'unité de commande (130), par une ligne de signalisation (134).

8. Dispositif selon l'une des revendications 1 à 7, caractérisé en ce que la buse de répartition (812) du répartiteur d'air (8) possède un orifice d'entrée (8123), un canal de passage (8122) et une embouchure (8121) et est logée, de manière mobile, dans un stator (825), qui contient un canal de référence (800) et des sorties (800 à 811), de telle sorte que l'embouchure (8121) de la buse de répartition (812) présente un certain écartement (X), avec la surface d'un espace de répartition (8251), du stator (825), que l'espace de répartition (8251) est ouvert à l'atmosphère, par un orifice (8254), que la buse de répartition (812) est raccordée à une source d'air comprimé (7) commandée par l'unité de commande (130), en passant par un espace creux (8252) étanché du stator (825) et une conduite d'alimentation (71) et que la buse de répartition (812) est reliée, au moyen d'un accouplement (141), à un arbre (142) d'un entraînement (140), qui est commandé par l'unité de commande (130).

9. Dispositif selon l'une des revendications 1 à 7, caractérisé en ce qu'une buse de répartition (812) du répartiteur d'air (8) possède un orifice d'entrée (8123), un canal de passage (8122) et une embouchure (8121) et est mobile, en ligne droite, par rapport à un stator (825), qui contient un canal de référence (800) et des sorties (801 à 811) et est adjoint de telle sorte que l'embouchure (8121) de la buse de répartition (812) présente un certain écartement (X) avec le stator (825), que la buse de répartition (812) est reliée à une source d'air comprimé (7) commandée par une unité de commande (130), en passant par une conduite d'alimentation (71) flexible et que la buse de répartition est reliée, au moyen d'un accouplement (141), à un arbre (142) d'un entraînement (140), qui est commandé par une unité de commande (130).

10. Dispositif selon l'une des revendications 8 ou 9, caractérisé en ce que le canal de référence (800) du répartiteur d'air (8) est raccordé à un indicateur (814) et que l'indicateur (814) est relié à une unité de commande (130), en passant par une ligne de signalisation (135).

11. Dispositif selon l'une des revendications 1 à 10, caractérisé en ce qu'une buse de répartition (812) est reliée, au moyen d'un accouplement (141), à un arbre (142) d'un entrainement (140) - par exemple un moteur pas à pas - qui possède un dispositif de retour d'information de sa position d'arbre et que le dispositif de retour d'information est raccordé à l'unité de commande (130).

12. Dispositif selon l'une des revendications 8 à 11, caractérisé en ce que le canal de référence (800) et les sorties (801 à 811) du répartiteur d'air (8) sont réalisés de manière conique, en se contractant, depuis l'intérieur du stator (825), vers l'extérieur.

FIG.1.

EP 0 144 362 B1

FIG. 2.

FIG.3.

FIG.4.

FIG. 5.

EP 0 144 362 B1

814

135

813

811 800 801

810 X 802

812

140 132 130 136

809 8251 141

8254 803

808 815 804

825 41 7 133

807 805

806

FIG. 6.

811 800 801

X 825

8251
8254 812

FIG. 9.

FIG. 7.

FIG.8.